# DEMANDE DE BREVET EUROPEEN

(11) **EP 2 667 016 A2**
(43) Date de publication de la demande: **27.11.2013**
(21) Numéro de dépôt: 13168554.7
(22) Date de dépôt: 21.05.2013
(51) Int. Cl.: F03B 17/06

(54) **Capteur d'energie cinetique pour fluides liquides**

(30) Priorité: 23.05.2012 FR 1201465
(71) Demandeur: Vantillard, Daniel, 27130 Mandres (FR)
(72) Inventeur: Vantillard, Daniel, 27130 Mandres (FR)
(74) Mandataire: Marconnet, Sébastien

(57) **Abrégé**

L'invention porte principalement sur un dispositif pour capter l'énergie cinétique des fluides liquides caractérisé en ce qu'il comporte au moins un élément cylindrique (5) monté sur un axe central (2) muni d'un ensemble d'aubes libres (8) extérieure articulée sur des axes (9) en sorte qu'au passage du fluide, les aubes (8) situées en partie basse sont ouvertes par gravité et offrent une surface d'appui au fluide traversant de manière à actionner la rotation de l'élément cylindrique (5), puis se referment par leur propre poids en partie supérieure de manière à laisser libre la circulation du fluide, et en ce que chaque axe d'articulation (9) est positionné à distance d'une extrémité de l'aube (8) correspondante située du côté de l'axe central (2) lorsque ladite aube (8) est ouverte.

## Description

La présente invention concerne un dispositif immergé à configuration horizontale, avec ou sans infrastructure, destiné à capter l'énergie cinétique de tout fluide liquide.

Actuellement, en milieu immergé, le rendement offert par les turbines et autres moyens disponibles sur le marché pour capter l'énergie cinétique des fluides liquides est améliorable.

D'autre part, l'exploitation des petites énergies (cours d'eau, réseaux techniques, etc...) est peu développée.

Le dispositif selon l'invention permet d'obtenir un rapport section fluide liquide exploité / couple mécanique reçu, avantageux. Son principe repose sur la présentation d'un ensemble d'aubes libres et articulées par gravité, ouvertes sur un coté, repliées sur l'autre et solidaires d'une cage cylindrique horizontale placée perpendiculairement à un flux de liquide. Cette configuration génère deux forces dynamiques de même sens mais de valeurs différentes par rapport à l'axe central. C'est la résultante de ces deux forces qui provoque la rotation de la cage. La surface franche d'appui des aubes offerte à l'énergie cinétique reçue optimise le couple qui est transmis sur un arbre mécanique.

Selon des modes particuliers de réalisation :
- La cage cylindrique peut comporter un ou plusieurs éléments cylindriques associés.
- Une canalisation du flux liquide en partie inférieure du cylindre peut améliorer les performances de l'appareil.
- Des accouplements souples entre les montants et les rampes de stabilisation peuvent assurer une meilleure assise.
- Une application avec un flux d'eau vertical peut être adaptable à l'appareil.

Plus précisément, l'invention a pour objet un dispositif pour capter l'énergie cinétique des fluides liquides **caractérisé en ce qu'il** comporte au moins un élément cylindrique monté sur un axe central muni d'un ensemble d'aubes libres extérieure articulée sur des axes en sorte qu'au passage du fluide, les aubes situées en partie basse sont ouvertes par gravité et offrent une surface d'appui au fluide traversant de manière à actionner la rotation de l'élément cylindrique, puis se referment par leur propre poids en partie supérieure de manière à laisser libre la circulation du fluide, et en ce que chaque axe d'articulation est positionné à distance d'une extrémité de l'aube correspondante située du côté de l'axe central lorsque ladite aube est ouverte.

Selon une réalisation, chaque aube est associée à un axe placé à proximité d'une âme centrale contre lequel vient en butée l'aube correspondante lorsqu'elle est ouverte.

Selon une réalisation, le dispositif comporte trois éléments cylindriques décalés angulairement entre eux de 120 degrés.

Selon une réalisation, le dispositif est en position perpendiculaire face à un flux de liquide.

Selon une réalisation, le dispositif est en position horizontale dans un espace liquide.

Selon une réalisation, le dispositif comporte deux rampes à profil incurvé à une extrémité qui assurent une stabilité.

L'invention sera mieux comprise à la lecture de la description qui suit et à l'examen des figures qui l'accompagnent. Ces figures sont données uniquement à titre illustratif mais nullement limitatif de l'invention.

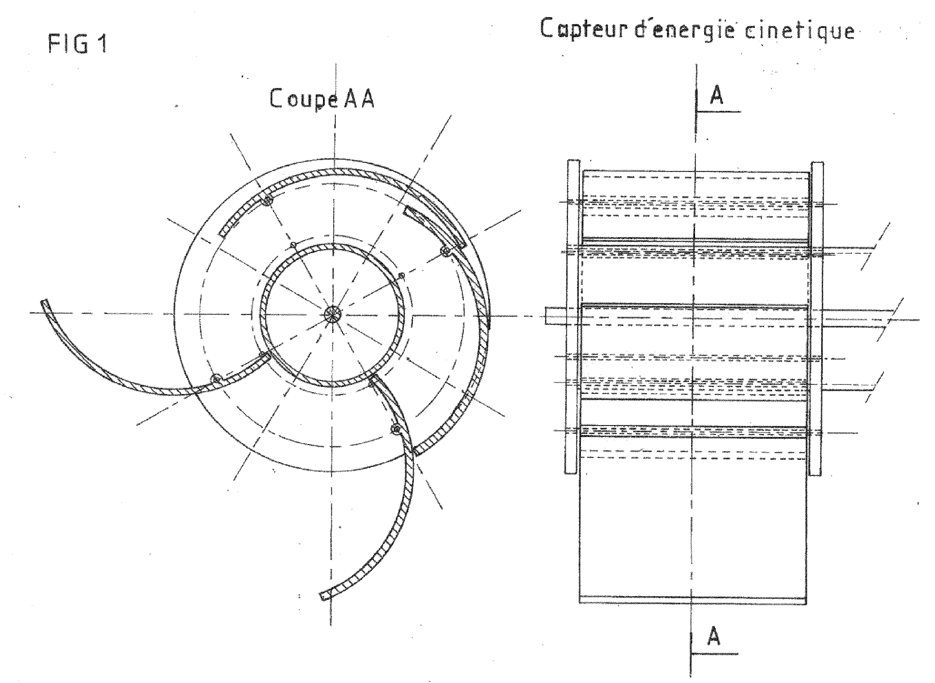

En l'occurrence, la figure 1 représente une vue de face et une vue de droite en coupe d'un élément de la cage cylindrique.

La figure 2 représente en perspective cavalière la configuration d'un appareil opérationnel à trois éléments munis de ses rampes de stabilisation.

La figure 3 représente un descriptif du principe de rotation du dispositif.

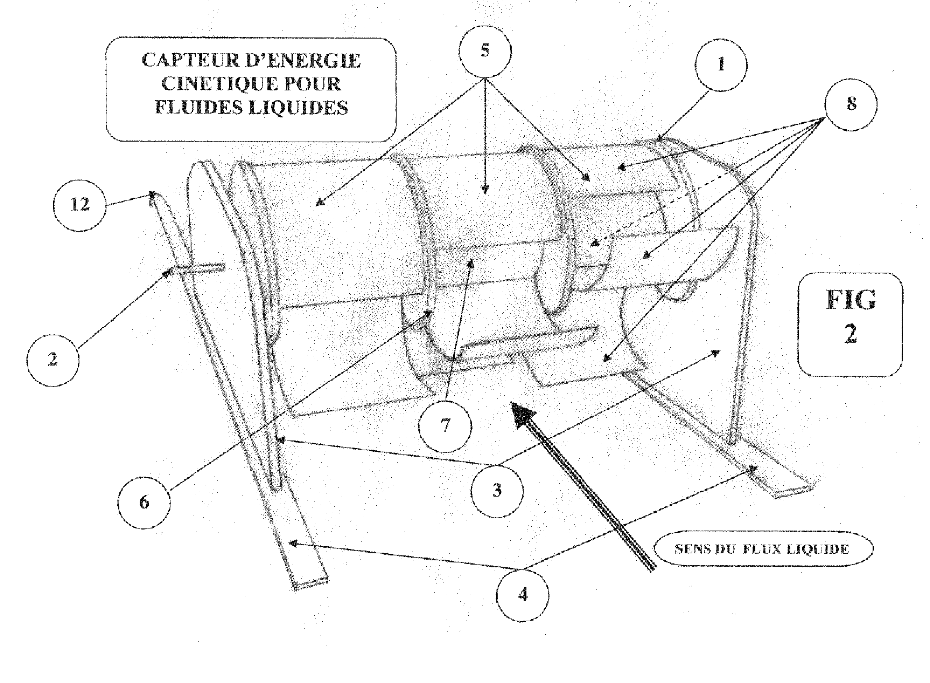

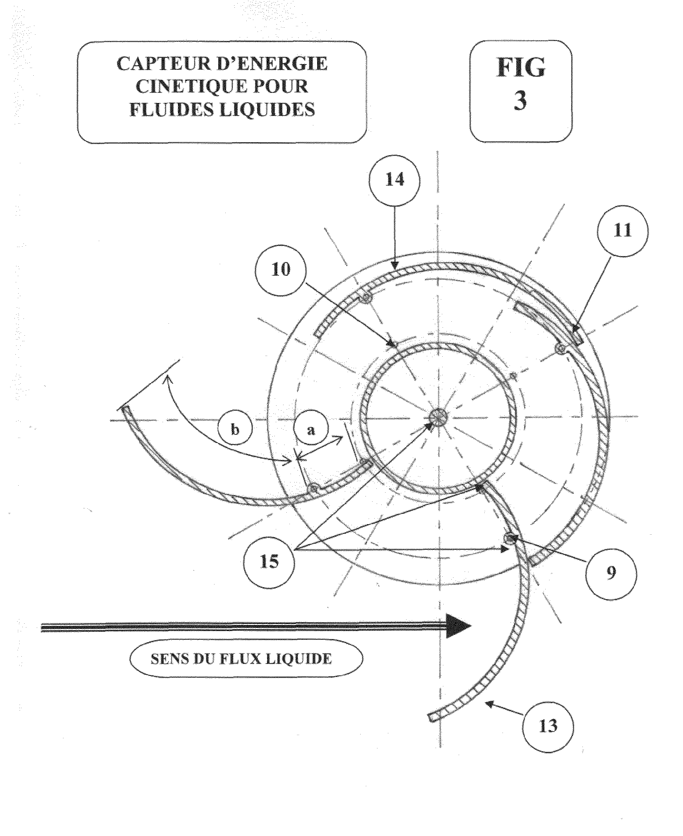

On note que les termes relatifs du type "inférieur" ou "supérieur" sont entendus par rapport à un dispositif en position de fonctionnement orienté comme représenté aux figures 2 et 3.

En référence à ces dessins, le dispositif est constitué d'une cage cylindrique 1, libre de rotation, solidaire à un axe central 2 et maintenue entre deux montants 3, ces derniers reposant sur des rampes de stabilisation 4.

La cage cylindrique 1 est composée de trois éléments identiques 5, juxtaposés et décalés respectivement de 120 degrés.

Chaque élément 5 de la cage cylindrique 1 est doté de flasques latéraux 6, deux éléments adjacents 5 ayant un flasque 6 en commun, d'une âme centrale pleine 7 et de quatre aubes articulées 8. Une tringlerie traversante assure l'articulation des douze aubes 8 et leur butée. Un ensemble de raidisseurs maintient la rigidité de la structure.

Les aubes 8 ont une largeur équivalente au passage libre entre deux flasques 6 dans chaque élément 5 et une forme qui épouse le pourtour extérieur de la cage cylindrique. La longueur de l'arc de chaque aube 8 est calculée pour assurer les performances et le recouvrement entre elles.

Chaque aube est articulée sur un axe 9 placé proche du diamètre extérieur de la cage cylindrique.

Chaque axe d'articulation 9 est excentré vers l'intérieur de l'aube 8 à laquelle il appartient, c'est-à-dire qu'il n'est pas placé à l'extrémité de l'aube 8 située du côté de l'axe central 2 lorsque l'aube 8 est ouverte. En effet, chaque axe d'articulation 9 est positionné à une distance "a" de cette extrémité, comme cela ressort clairement de la figure 3. On a référencé également une référence "b" correspondant à la distance entre l'axe d'articulation 9 et l'extrémité opposée, c'est-à-dire celle la plus éloignée de l'axe central 2 lorsque l'aube 8 est ouverte. De préférence, le rapport entre la distance a et la distance a+b (a/(a+b)) est compris entre 1/6 et 1/4.

Une articulation d'aube excentrée permet une anticipation au déploiement de l'aube 8 par une pression sur la partie (a) extérieure de l'aube 8 s'additionnant à l'ouverture par gravité.

En outre, il est à noter qu'une articulation d'aube 9 excentrée à l'intérieure de l'aube 8 apporte un développé d'aube plus important qu'une articulation en extrémité de l'aube 8. L'invention offre ainsi une surface plus importante à l'énergie reçue et un parcours plus long d'entrainement à la rotation, ce qui permet une optimisation de la captation de l'énergie, et ce même dans un flux d'eau restreint.

Ainsi, pour un même diamètre extérieur d'environ 500 mm du dispositif avec les aubes 8 en position ouverte, un axe d'articulation 9 excentré intérieurement par exemple d'une distance a=78 mm apportera un diamètre d'âme intérieure de 100mm et un arc d'aube environ de 200mm.

Un axe d'articulation 9 en extrémité d'aube apportera un diamètre d'âme intérieure de 195 mm et un arc d'aube environ de 153 mm

Soit un gain de surface offerte au flux de liquide grâce à l'axe d'articulation excentré environ de 30 % pour un même diamètre extérieur du dispositif avec les aubes en position ouverte.

Chaque aube en position ouverte vient en butée sur un axe 10 placé près de l'âme centrale 7. Chaque aube en position fermée repose sur l'aube qui la précède 11.

En milieu immergé, le dispositif, placé perpendiculairement à un flux de liquide, est traversé par ce dernier.

Au passage du fluide, des aubes en partie basse s'ouvrent par gravité, la pression sur la partie "a" facilitant cette ouverture, et offrent une surface d'appui au fluide traversant. De ce fait, ces aubes solidaires de la cage cylindrique actionnent la rotation, se referment par leur propre poids en partie supérieure mais soumettent les aubes suivantes à une ouverture.

Le mouvement est assuré par le fait d'une résistance très limitée en partie haute du cylindre et une pression active sur les aubes ouvertes en partie basse.

Ainsi, par la vitesse du fluide liquide, un cycle continu est crée et grâce au décalage angulaire de 120 degrés entre chaque élément 5, un lissage de la rotation de la cage cylindrique, c'est-à-dire une rotation non saccadée est assurée. Alternativement, il serait toutefois possible d'envisager des configurations à plus ou moins de trois éléments identiques ou non, le nombre d'éléments implantés dépendant de l'application.

Deux rampes de stabilisation 4 à profil incurvé à l'extrémité 12 permettent d'obtenir un centre de gravité bas et assurent ainsi une meilleure immobilisation de l'appareil en fond de lit. Le dispositif n'est pas nécessairement arrimé pour des petites puissances. Le dispositif capte l'énergie indépendamment du niveau de liquide.

Un prototype, transportable à main d'homme, construit en inox et PVC assemblé, de diamètre 200 mm, composé de trois éléments de largeur 160 mm utiles, a fait l'objet de tests de fonctionnalité dans un cours d'eau durant huit semaines et a conservé sa vitesse de rotation initiale.

Pour cet appareil, les conclusions ont permis de retenir que pour une vitesse de courant d'eau de trois mètres / seconde, la rotation du cylindre était de 70 tr/mn et une puissance estimée en bout d'arbre d'environ 100 watts.

Les performances du dispositif peuvent être améliorées.

Pour favoriser les conclusions d'une éventuelle étude d'impact sur l'environnement, les paliers ne sont pas lubrifiés, l'appareil ne génère pas de pollution visuelle puisqu'il est immergé et ne comporte aucun mouvement mécanisé.

Le dispositif selon l'invention est ouvert à de nombreuses applications (besoins électriques ou mécaniques) telles que, la captation de l'énergie pour le pompage par exemple dans les cours d'eau à bas niveau ou le fond de mer, le turbinage dans des réseaux techniques, le pompage de loisir et agricole, le rechargement de batteries, l'usage en milieu désertique, l'énergie de secours pour la navigation, etc...

## Revendications

1. Dispositif pour capter l'énergie cinétique des fluides liquides **caractérisé en ce qu'il** comporte au moins un élément cylindrique (5) monté sur un axe central (2) muni d'un ensemble d'aubes libres (8) extérieure articulée sur des axes (9) en sorte qu'au passage du fluide, les aubes (8) situées en partie basse sont ouvertes par gravité et offrent une surface d'appui au fluide traversant de manière à actionner la rotation de l'élément cylindrique (5), puis se referment par leur propre poids en partie supérieure de manière à laisser libre la circulation du fluide, et **en ce que** chaque axe d'articulation (9) est positionné à distance d'une extrémité de l'aube (8) correspondante située du côté de l'axe central (2) lorsque ladite aube (8) est ouverte.

2. Dispositif selon la revendication 1, **caractérisé en ce que** chaque aube (8) est associée à un axe (10) placé à proximité d'une âme centrale contre lequel vient en butée l'aube (8) correspondante lorsqu'elle est ouverte.

3. Dispositif selon la revendication 1 ou 2, **caractérisé en ce qu'il** comporte trois éléments cylindriques (5) décalés angulairement entre eux de 120 degrés.

4. Dispositif selon l'une des revendications 1 à 3, **caractérisé en ce qu'il** est en position perpendiculaire face à un flux de liquide.

5. Dispositif selon l'une des revendications 1 à 4, **caractérisé en ce qu'il** est en position horizontale dans un espace liquide.

6. Dispositif selon l'une des revendications 1 à 5, **caractérisé en ce qu'il** comporte deux rampes à profil incurvé à une extrémité (12) qui assurent une stabilité.
